# EUROPÄISCHE PATENTSCHRIFT

(11) **EP 1 682 596 B1**
(45) Veröffentlichungstag und Bekanntmachung des Hinweises auf die Patenterteilung: **22.06.2011**
(21) Anmeldenummer: 04790481.8
(22) Anmeldetag: 15.10.2004
(51) Int. Cl.: C08G 18/28, C08G 18/70, C09J 175/04

(54) **WASSEREMULGIERBARE ISOCYANATE MIT VERBESSERTEN EIGENSCHAFTEN**
WATER-EMULSIFIABLE ISOCYANATES HAVING IMPROVED PROPERTIES
ISOCYANATES EMULSIFIABLES DANS L'EAU PRESENTANT DES PROPRIETES AMELIOREES

(30) Priorität: 27.10.2003 DE 10350242
(43) Veröffentlichungstag der Anmeldung: 26.07.2006
(73) Patentinhaber: BASF SE, 67056 Ludwigshafen (DE)
(72) Erfinder: WAGNER, Eva, 67346 Speyer (DE); HÄBERLE, Karl, 67346 Speyer (DE)
(86) Internationale Anmeldenummer: PCT/EP2004/011639
(87) Internationale Veröffentlichungsnummer: WO 2005/047357

(56) Entgegenhaltungen:
- EP-A- 0 540 985
- EP-A- 0 959 087
- DE-A- 10 007 821

## Beschreibung

Die vorliegende Erfindung betrifft ein zweistufiges Verfahren zur Herstellung einer wasseremulgierbaren Polyisocyanatzubereitung bei dem man in einem Schritt (A) ein dispergieraktives Umsetzungsprodukt aus mindestens einem Diisocyanat und mindestens einem Polyalkylenetheralkohol herstellt und in einem zweiten Schritt (B) das Umsetzungsprodukt mit einem aliphatischen Polyisocyanat in Gegenwart eines Allophanatisierungskatalysators vermischt. Die Erfindung betrifft weiterhin eine wasseremulgierbare Polyisocyanatzubereitung, die nach dem Verfahren erhältlich ist sowie die Verwendung der Zubereitung in wässrigen Beschichtungsmitteln und in Klebstoffdispersionen.

Wasseremulgierbare Polyisocyanatzubereitungen sind prinzipiell bekannt. Eine besondere Rolle spielen wasserdispergierbare Polyisocyanate heute als Vernetzerkomponenten für wasserverdünnbare Zweikomponenten-Polyurethan(2K-PUR)-Lacke. In Kombination mit wässrigen Polyoldispersionen gestatten sie die Formulierung lösemittelfreier Lacksysteme, die bereits bei Raumtemperatur zu qualitativ hochwertigen Beschichtungen aushärten, die hinsichtlich Lösemittel- und Chemikalienbeständigkeit oder mechanischer Belastbarkeit konventionellen Lacken in nichts nachstehen.

Als Polyisocyanatkomponenten in derartigen Zubereitungen werden insbesondere isocyanuratgruppen aufweisende Polyisocyanate auf Basis von aliphatischen und/oder cycloaliphatischen Diisocyanaten eingesetzt. Um die Emulgierbarkeit in Wasser zu erreichen ist es einerseits bekannt, die Polyisocyanate direkt auf geeignete Art und Weise mit hydrophilen Polyoxyalkylengruppen umzusetzen.

Beispiele für derartige Umsetzungen bzw. Zubereitungen sind in EP-A 206 059, EP-A 959 087 oder WO 01/40347 offenbart.

Daneben sind auch zweistufige Verfahren bekannt. EP-A 486 881 offenbart ein zweistufiges Verfahren, bei dem in einem ersten Schritt zunächst ein Emulgator aus einem Diisocyanat und Polyalkylenetheralkoholen synthetisiert wird. Dieser Emulgator wird in einem zweiten Schritt mit mindestens einem aliphatischen Polyisocyanat vermischt, wodurch eine wasseremulgierbare Zubereitung erhalten wird. Ein zweistufiges Verfahren erlaubt letztlich eine gezieltere Steuerung der Eigenschaften im Vergleich zu einstufigen Verfahren. Nachteiligerweise geht jedoch eine gute Emulgierbarkeit, d.h. der Einsatz einer hohen Konzentration an Polyalkylenethergruppen, häufig auf Kosten anderer Eigenschaften, z.B. der Lackhärte.

DE 100 07 821 offenbart ein zweistufiges Verfahren, bei dem in einem ersten Schritt ein Emulgator aus einem 4-Isocyanatomethyl-1,8-octandiisocyanat und einem monofunktionellen Polyethyleoxidpolyether hergestellt wird. Dieser Emulgator wird in einem zweiten Schritt mit einem HDI-trimer und einem Allophanatisierungskatalysator vermischt und unter solche Bedingungen reagiert dass zwischen den Umsetzungsprodukt aus der ersten Stufe und dem HDI-trimer Allophanatgruppen gebildet werden.

Aufgabe der Erfindung war es daher, ein zweistufiges Verfahren zur Herstellung wasseremulgierbarer Polyisocyanat-Zubereitungen bereit zu stellen, welches besser emulgierbare Produkte bei gleichzeitig verbesserten anwendungstechnischen Eigenschaften, insbesondere verbesserter Lackhärte und Wasserfestigkeit liefert. Dementsprechend wurde ein zweistufiges Verfahren zur Herstellung einer wasseremulgierbaren Polyisocyanatzubereitung, gefunden bei dem man in einem ersten Schritt
(A) ein dispergieraktives Umsetzungsprodukt (E) aus mindestens einem Diisocyanat, ausgewählt aus der Gruppe von Tetramethylendiisocyanat, Hexamethylendiisocyanat, Dodecamethylendiisocyanat, 1,4-Diisocyanatocyclohexan, 4,4'-Di-(isocyanatocyclohexyl)-methan, Trimethylhexandiisocyanat, Tetramethylhexan-diisocyanat, 1-Isocyanato-3,3,5-trimethyl-5-(isocyanatomethyl)cyclohexan, 2,4- und 2,6-Toluylendiisocyanat, Tetramethylxylylen-diisocyanat, p-Xylylendiisocyanat, 2,4'- und 4,4'-Diisocyanatodiphenylmethan, mit mindestens einem ein- oder mehrwertigen Polyalkylenetheralkohol mit 2 bis 4 C-Atomen in den Alkylengruppen, der eine mindestens 8 Ethylenoxideinheiten aufweisende Polyetherkette umfasst, herstellt und man das erhaltene Umsetzungsprodukt (E) in einem zweiten Verfahrenschritt
(B) mit mindestens einem aliphatischen Polyisocyanat mit einer mittleren NCO-Funktionalität von 2,5 bis 3,5 vermischt,
   wobei man Schritt (B) in Gegenwart eines Allophanatisierungskatalysator ausführt und die Bedingungen so wählt, dass aus (E) und dem Polyisocyanat Allophanatgruppen gebildet werden.

Weiterhin wurden nach dem erfindungsgemäßen Verfahren erhältliche wasseremulgierbare Polyisocyanatzubereitungen gefunden sowie deren Verwendung in wässrigen Beschichtungsmitteln und Klebstoffdispersionen.

Die erfindungsgemäßen Zubereitungen weisen im Vergleich zu den gemäß EP-A 486 881 hergestellten Produkten verbesserte Emulgierbarkeit bei gleichzeitig verbesserten anwendungstechnischen Eigenschaften auf. Mit den erfindungsgemäßen Zubereitungen hergestellte Lacke weisen eine größere Härte sowie eine verbesserte Wasserfestigkeit auf.

Zu der Erfindung ist im Einzelnen das Folgende auszuführen:
In Schritt (A) des erfindungsgemäßen Verfahrens wird zunächst das dispergieraktive Umsetzungsprodukt (E) aus mindestens einem Diisocyanat und mindestens einem Polyalkylenetheralkohol synthetisiert. (E), beziehungsweise dessen Umsetzungsprodukt mit dem Polyisocyanat zum Allophanat, dient als Emulgator, wenn die nicht wässrige Zubereitung zur Anwendung in einem wässrigen Medium emulgiert oder dispergiert wird. Bei dem Diisocyanat handelt es sich um mindesten eines,-ausgewählt aus der Gruppen von Tetramethylendiisocyanat, Hexamethylendiisocyanat, Dodecamethylendiisocyanat, 1,4-Diisocyanatocyclohexan, 4,4'-Di-(isocyanatocyclohexyl)-methan, Trimethylhexandiisocyanat, Tetramethylhexandiisocyanat, 1-Isocyanato-3,3,5-trimethyl-5-(isocyanatomethyl)-cyclohexan, 2,4- und 2,6 Toluylendiisocyanat, Tetramethylxylylen-diisocyanat, p-Xylylendiisocyanat oder 2,4'- und 4,4'-Diisocyanatodiphenylmethan.
   Bevorzugt sind 2,4'- und 4,4'-Diisocyanatodiphenylmethan (MDI) und 4,4'-Di-(isocyanatocydohexyl)-methan (HMDI) sowie insbesondere 2,4- und 2,6-Toluylendiisocyanat (TDI). In vielen Fällen haben sich auch Hexamethylendiisocyanat (HDI) und 1-Isocyanato-3,3,5-trimethyl-5-(isocyanatomethyl)cyclohexan (IPDI) bewährt.

Die Diisocyanatkomponente wird mit einem Polyalkylenetheralkohol umgesetzt. Die Alkylengruppe im Polyalkylenetheralkohol hat üblicherweise 2 bis 4 C-Atome, typisch sind -CH₂-CH(CH₃)-, -(CH₂)₄- und bevorzugt -(CH₂)₂-. Die Herstellung der Polyalkylenetheralkohole kann in bekannter Art und Weise durch Alkoxylierung von geeigneten Startern, beispielsweise Alkoholen, erfolgen. Es können polyfunktionelle Starter oder bevorzugt monofunktionelle Starter eingesetzt werden, und dementsprechend ist auch der Polyalkylenetheralkohol mehr- oder bevorzugt einwertig. Beispiele geeigneter Startermoleküle umfassen Glykolhexanol, 3-Methyl-3-Hydroxymethyloxethan, Phenol, Ethylenglykol, Propylenglykol, Anilin, Pentaerythrit, Trimethylolpropan oder Glycerin. Bevorzugt sind C₁-C₆-Alkanole wie Methanol, Ethanol, n-Propanol oder n-Butanol. Üblicherweise erfolgt die Herstellung unter saurer oder basischer Katalyse. Für viele Anwendungen der Polyalkylenetheralkohole ist eine anschließende Entsalzung der Produkte üblich. Die Polyalkylenetherketten können gemischt, beispielsweise aus Ethylenoxid- und Propylenoxideinheiten aufgebaut sein. Die Ketten umfassen im Regelfalle 8 bis 70, bevorzugt 10 bis 20 Ethylenoxideinheiten. Gute Ergebnisse werden erzielt, wenn der Polyalkylenetheralkohol mindestens 60 Gew.-%, bevorzugt mindestens 80 Gew. % an Ethylenoxideinheiten enthält. Besonders bevorzugt sind reine Polyethylenoxidketten.

Das Zahlenverhältnis von OH-Gruppen zu NCO-Gruppen in Schritt (A) beträgt üblicherweise 0,6 bis 1,2, bevorzugt 0,8 bis 1,2, besonders bevorzugt 0,9 bis 1,1 und ganz besonders bevorzugt ca. 1:1. Diese Umsetzung des Polyalkylenetheralkohols mit dem Diisocyanat ist an sich bekannt und verläuft üblicherweise bei Temperaturen von 10 bis 150, vorzugsweise von 20 bis 100°C ab. Die Reaktionsdauer ist im allgemeinen so bemessen, dass die mit Isocyanatgruppen reaktionsfähigen Gruppen des Polyalkylenetheralkohols zu mindestens 90 mol % mit Isocyanat umgesetzt sind. Die Umsetzung kann durch die Mitverwendung an sich bekannter, katalytisch wirksamer Substanzen beschleunigt werden.

In Schritt (B) des erfindungsgemäßen Verfahrens wird Umsetzungsprodukt (E) mit einem aliphatischen Polyisocyanat mit einer mittleren NCO-Funktionalität von 2,5 bis 3,5 abgemischt und zum Allophanat umgesetzt.

Schritt (B) schließt sich bevorzugt unmittelbar an Schritt (A) an; es ist aber auch möglich, (E) zunächst zu isolieren und/oder zu reinigen und danach in einem neuen Ansatz mit dem Polyisocyanat umzusetzen.

Das aliphatische Polyisocyanat weist im allgemeinen einen NCO-Gehalt von 5 bis 30, vorzugsweise von 10 bis 25 Gew.-% auf.

Aliphatische Polyisocyanate im Sinne der Erfindung sind:
1. Isocyanuratgruppen aufweisende Polyisocyanate auf Basis von aliphatischen und/oder cycloaliphatischen Diisocyanaten. Besonders bevorzugt sind die entsprechenden Isocyanato-Isocyanurate auf Basis von 1,6-Diisocyanatohexan und/oder 1-Isocyanato-3,3,5-trimethyl-5-(isocyanatomethyl)cyclohexan (Isophorondiisocyanat (IPDI). Die Herstellung derartiger Isocyanuratgruppen aufweisender Polyisocyanate ist beispielsweise in DE-A 2 616 416, EP-A 3765, EP-A 10 589, EP-A 47 452, US-A 4 288 586 oder US-A 4 324 879 beschrieben. Grundsätzlich können in der erfindungsgemäßen Polyisocyanat-Zubereitung nicht nur diese besonders bevorzugten Verbindungen, sondern beliebige Isocyanuratgruppen aufweisende Polyisocyanate auf Basis aliphatischer und/oder cycloaliphatischer Diisocyanate vorliegen. Bei geeigneten Isocyanato-Isocyanuraten handelt es sich insbesondere um einfache Tris-isocyanatoalkyl- (bzw. - cycloalkyl-)isocyanurate der Formel 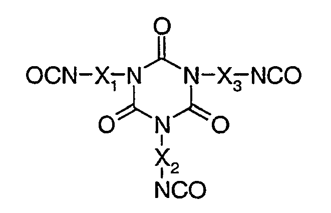 bzw. deren Gemische mit ihren höheren, mehr als einen Isocyanuratring aufweisenden Homologen, wobei in dieser Formel X₁, X₂ und X₃ für gleiche oder verschiedene Reste stehen und den dem Ausgangsdiisocyanat zugrundeliegenden Kohlenwasserstoffrest bedeuten. Die Isocyanato-Isocyanurate weisen im allgemeinen einen NCO-Gehalt von 10 bis 30, vorzugsweise 15 bis 25 Gew.-% und eine mittlere NCO-Funktionalität von 2,6 bis 3,5 auf.
   Aliphatische Polyisocyanate im Sinne der Erfindung sind ferner:
2. Biuretgruppen aufweisende Polyisocyanate mit aliphatisch gebundenen Isocyanatgruppen, insbesondere Tris-(6-isocyanatohexyl)-biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 3 bis 3,5 auf.
   Aliphatische Polyisocyanate im Sinne der Erfindung sind ferner:
3. Urethan- und/oder Allophanatgruppen aufweisende Polyisocyanate mit aliphatisch oder cycloaliphatisch gebundenen Isocyanatgruppen, wie sie beispielsweise durch Umsetzung von überschüssigen Mengen an Hexamethylendiisocyanat oder an IPDI mit einfachen mehrwertigen Alkoholen wie z.B. Trimethylolpropan, Glycerin, 1,2-Dihydroxypropan oder deren Gemischen erhalten werden können. Diese Urethan- und/oder Allophanatgruppen aufweisenden Polyisocyanate weisen im allgemeinen einen NCO-Gehalt von 12 bis 20 Gew.-% und eine mittlere NCO-Funktionalität von 2,5 bis 3 auf.

Bevorzugt werden Polyisocyanate der Gruppen 1 und 2 eingesetzt. Es kann selbstverständlich auch ein Gemisch der genannten Polyisocyanate verwendet werden.

Das Umsetzungsprodukt (E) wird üblicherweise in einer solchen Menge eingesetzt, dass die wasseremulgierbare Polyisocyanatzubereitung 1 bis 25 Gew.-%, bevorzugt 5-20 Gew.-% und besonders bevorzugt 10-15 Gew.-% davon enthält.

Hierzu Schritt (B) in Gegenwart eines geeigneten Allophanatisierungskatalysators ausgeführt. Die Zugabe des Allophanatisierungskatalysators kann hierbei vor oder während des Schrittes (B) erfolgen. Es ist aber auch möglich, den Allophanatisierungskatalysator bereits vor oder während des Schrittes (A) zuzugeben. Da die NCO-Gruppen bevorzugt mit vorhandenen OH-Gruppen reagieren ist die Bildung von Allophanatgruppen in Schritt (A) im Regelfalle vernachlässigbar.

Allophanatisierungskatalysatoren sind dem Fachmann prinzipiell bekannt.

Zur Ausführung des erfindungsgemäßen Verfahrens geeignete Allophanatisierungskatalysatoren umfassen insbesondere Zinkverbindungen, wie Zink-(II)-n-octanoat, Zink-(II)-2-ethyl-1-hexanoat oder Zink-(II)-acetylacetonat, Ammoniumsalze wie z.B. N,N,N-Trimethyl-N-(2-hydroxypropyl)-ammonium-2-ethylhexanoat, Alkalisalze wie z.B. Kalium-octoat, Kaliumacetat oder Kaliumformiat.

Bevorzugte Katalysatoren für das erfindungsgemäße Verfahren sind Zinkverbindungen und Alkalisalze der obengenannten Art. Besonders bevorzugt sind die Kaliumsalze und ganz besonders bevorzugt ist Kaliumacetat.

Diese Katalysatoren kommen beim erfindungsgemäßen Verfahren in einer Menge von 0,001 bis 5 Gew.-%, vorzugsweise 0,005 bis 1 Gew.-%, bezogen auf das Gesamtgewicht der Reaktionspartner zum Einsatz.

Im Regelfalle wird die Allophanatisierung bei erhöhten Temperaturen, beispielsweise bei 40 bis 140°C, bevorzugt 60 bis 100°C durchgeführt.

Der Verlauf der Umsetzung kann z.B durch titrimetirische Bestimmung des NCO-Gehaltes verfolgt werden.

Der Grad der Allophanatisierung wird vom Fachmann je nach den gewünschten Eigenschaften der wasseremulgierbaren Zubereitung bestimmt. Es hat sich bewährt, dass mindestens 10 mol % der Urethangruppen des in Schritt (A) gebildeten Umsetzungsproduktes (E) zu Allophanatgruppen umgesetzt werden. Bevorzugt beträgt der Umsetzungsgrad 15 bis 100 mol % und besonders bevorzugt 20 bis 100 mol %.

Das Vermischen und Umsetzen sollte bevorzugt unter intensivem Rühren erfolgen. Um zu hohe Viskositäten zu vermeiden, können auch noch inerte Lösemittel anwesend sein.

Die so hergestellte Polyisocyanatzubereitung wird vorzugsweise in Substanz verwendet. Selbstverständlich kann man der Zubereitung vor ihrer Verwendung auch geringe Mengen, d.h. beispielsweise 1 bis 40 Gew.-% bezogen auf die lösungsmittelfreie Zubereitung, eines organischen Lösungsmittels wie z.B. Ethylacetat, Butylacetat, Aceton, Methoxypropylacetat, Propylencarbonat oder Methylethylketon zusetzen, um die Viskosität zu reduzieren. Es können selbstverständlich auch Mischungen aus den genannten Lösemitteln eingesetzt werden. Ferner ist es möglich, die erfindungsgemäßen Polyisocyanatzubereitungen zu wässrigen Emulsionen bzw. Dispersionen mit einem Wassergehalt von im allgemeinen 90 bis 35 Gew.-% zu verarbeiten. Die Herstellung dieser Dispersionen bzw. Emulsionen erfolgt durch einfaches Vermischen der Polyisocyanatzubereitung mit Wasser. Es sind dabei nur geringe Scherkräfte erforderlich, was ein großer Vorteil für den Verarbeiter ist. Es können die dem Fachmann bekannten Mischeinrichtungen wie einfache Rühreinrichtungen eingesetzt werden.

Die erfindungsgemäße Polyisocyanatzubereitung eignet sich zur Modifizierung von wässrigen Beschichtungsmittein für Metall, Holz, Papier, Pappe, Kunststoff, Textilien und insbesondere Leder auf Basis von wässrigen Dispersionen oder Lösungen eines Feststoffgehaltes von 5 bis 40 Gew.-%, vorzugsweise von 5 bis 20 Gew.-%. Als Beschichtungsmittel kommen die an sich bekannten wässrigen Dispersionen von Homo- und Copolymerisaten olefinisch ungesättigter Monomerer oder Polyurethanen oder auch Lösungen von Naturstoffen, wie z.B. von Casein, in Betracht.

Die erfindungsgemäßen Polyisocyanatzubereitungen werden den wässrigen Beschichtungsmitteln im allgemeinen in einer Menge von 1 bis 25, vorzugsweise von 2,5 bis 20 Gew.-%, bezogen auf den Feststoffgehalt des Beschichtungsmittels, zugesetzt.

Sie werden in bekannter Weise durch z.B. Spritzen auf das Substrat aufgebracht. Bei der Beschichtung von Leder oder Kunstleder mit derart modifizierten Dispersionen oder Lösungen ergeben sich besonders gute Nassreibechtheiten und Knickbeständigkeiten.

Die erfindungsgemäße Polyisocyanatzubereitung eignet sich insbesondere zur Modifizierung von wässrigen Klebstoffen, beispielsweise auf Basis von wässrigen Dispersionen eines Feststoffgehalts entsprechend eines Bindemittelgehaltes von 10 bis 65 Gew.-%, vorzugsweise 20 bis 60 Gew.-%, wie Naturlatex, wässrigen Dispersionen von Homo- oder Copolymerisaten olefinisch ungesättigter Monomerer und den an sich bekannten wässrigen Polyurethandispersionen.

Geeignete Dispersionen von Homo- oder Copolymerisaten olefinisch ungesättigter Monomerer sind z.B. an sich bekannte Dispersionen von Homo- oder Copolymerisaten auf Basis von Vinylestern von Carbonsäuren mit 2 bis 18, vorzugsweise 2 bis 4 Kohlenstoffatomen wie insbesondere Vinylacetat, gegebenenfalls mit bis zu 70 Gew.-% bezogen auf Gesamtmenge an olefinisch ungesättigten Monomeren, an anderen olefinisch ungesättigten Monomeren und/oder von Homo- oder Copolymerisaten von (Meth)Acrylsäureestern von Alkoholen mit 1 bis 18, vorzugsweise 1 bis 4 Kohlenstoffatomen wie insbesondere (Meth)Acrylsäure-, -methyl-, -ethyl-, -propyl-, -hydroxyethyl- oder -hydroxypropyl-estern, gegebenenfalls zusammen mit bis zu 70 Gew.-% an anderen olefinisch ungesättigten Monomeren und/oder Butadien-Styrol-Copolymerisaten mit einem Gehalt an Butadien von ca. 20 bis 60 Gew.-% und/oder von anderen Dien-Polymerisaten oder -Copolymerisaten wie Polybutadien oder Mischpolymerisaten von Butadien mit anderen olefinisch ungesättigten Monomeren wie z.B. Styrol, Acrylnitril und/oder Methacrylnitril und/oder wässrige Dispersionen von Polymerisaten bzw. Copolymerisaten des 2-Chlor-butadien-1,3, gegebenenfalls mit anderen olefinisch ungesättigten Monomeren der oben beispielhaft genannten Art, z.B. solchen eines Chlorgehalts von ca. 30 bis 40 Gew. %, insbesondere eines Chlorgehalts von ca. 36 Gew.-%.

Bevorzugt werden wässrige Dispersionen von Copolymerisaten aus 90 bis 99,5 Gew.-% Acrylaten oder Methacrylaten von 1 bis 4 C-Atomen enthaltenden Alkanolen und 0,5 bis 10 Gew.%, jeweils bezogen auf das Copolymerisat, von Hydroxyalkylacrylaten und -methacrylaten mit 2 bis 20 C-Atomen im Hydroxyalkylrest, wie Hydroxyethyl-, Hydroxypropyl- oder Hydroxybutylacrylat oder -methacrylat. Solche Dispersionen sind an sich bekannt und in üblicher Weise durch Emulsionspolymerisation herstellbar (s. Houben-Weyl, Methoden der organischen Chemie, 4. Auflage, Bd. E 20, S.217 ff.).
Geeignete wässrige Polyurethandispersionen sind solche der an sich bekannten Art, wie sie z.B. in US-A 3 479 310, GB-A 1 076 688, US-A 4 108 814, US-A 4 108 814, US-A 4 092 286, DE-A 2 651 505, US-A 4 190 566, DE-A 2 732 131 oder DE-A 2 811 148 beschrieben sind.

Die eingesetzten wässrigen Klebstoffe können die in der Klebstofftechnologie üblichen Hilfs- und Zusatzmittel enthalten. Hierzu gehören beispielsweise Füllstoffe, wie Quarzmehl, Quarzsand, hochdisperse Kieselsäure, Schwerspat, Calciumcarbonat, Kreide, Dolomit oder Talkum, die oft zusammen mit geeigneten Netzmitteln wie z.B. Polyphosphaten wie Natriumhexametaphosphat, Naphthalinsulfonsäuren, Ammonium- oder Natriumpolyacrylsäuresalzen eingesetzt werden, wobei die Netzmittel im allgemeinen in Mengen von 0,2 bis 0,6 Gew.-%, bezogen auf Füllstoff, zugesetzt werden.

Weitere geeignete Hilfsmittel sind z.B. in Mengen von 0,01 bis 1 Gew.-%, bezogen auf Klebstoff, einzusetzende organische Verdickungsmittel wie z.B. Zellulose-Derivate, Alginate, Stärke oder Stärkederivate oder Polyacrylsäure oder in Mengen von 0,05 bis 5 Gew. %, bezogen auf Klebstoff, einzusetzende anorganische Verdickungsmittel wie z.B. Bentonite.

Auch Fungizide zur Konservierung können den Klebstoffen zugesetzt werden. Diese kommen im allgemeinen in Mengen von 0,02 bis 1 Gew.-%, bezogen auf Klebstoff, zum Einsatz. Geeignete Fungizide sind beispielsweise Phenol- und Kresol-Derivate oder Zinn-organische Verbindungen.

Klebrigmachende Harze wie z.B. Naturharz oder modifizierte Harze wie Kolophoniumester oder synthetische Harze wie Phthalatharze können ebenfalls im Klebstoff in bekannten Mengen vorliegen.

Auch Lösungsmittel wie beispielsweise Toluol, Xylol, Butylacetat, Methylethylketon, Ethylacetat, Dioxan oder deren Gemische oder Weichmacher wie beispielsweise solche auf Adipat-, Phthalat- oder Phosphat-Basis können den wässrigen Klebstoffdispersionen zugesetzt werden.

Die erfindungsgemäßen Polyisocyanat-Zubereitungen werden den wässrigen Klebstoffen im allgemeinen in einer Menge von 1 bis 20, vorzugsweise 2 bis 10 Gew.-%, bezogen auf das Bindemittel der wässrigen Klebstoffdispersion, zugesetzt.

Dazu kann man die erfindungsgemäße nichtwässrige Polyisocyanat-Zubereitung in die Klebstoffdispersion in bekannter Weise einrühren. In manchen Fällen werden gute Ergebnisse erzielt, wenn man zunächst eine wässrige Dispersion herstellt und diese mit der Klebstoffdispersion vermischt.

Die so modifizierten wässrigen Klebstoffe eignen sich zum Verkleben beliebiger Werkstoffe gleicher oder verschiedener Art, z.B. zum Verkleben von Holz, Papier, Kunststoffen, Textilien, Leder und anorganischen Materialien, wie Keramik, Steingut oder Asbestzement.

Die folgenden Beispiele sollen die Erfindung näher erläutern.

Für die Versuche wurden die folgenden Ausgangsmaterialien eingesetzt:

### Polyether A:

Auf Methanol gestartetes und unter Kaliumhydroxid-Katalyse hergestelltes, monofunktionelles Polyethylenoxid mit einer OH Zahl von 112, gemessen nach DIN 53 240, entsprechend einem Molekulargewicht von 500 g/mol. Die noch anwesenden basischen Katalysatorreste wurden anschließend mit Essigsäure neutralisiert und das Produkt entsalzt. Hierbei wird auch gebildetes Kaliumacetat entfernt.

### Polyether B:

Auf Methanol gestartetes und unter Kaliumhydroxid Katalyse hergestelltes, monofunktionelles Polyethylenoxid mit einer OH Zahl von 112, gemessen nach DIN 53 240, entsprechend einem Molekulargewicht von 500 g/mol. Die noch anwesenden basischen Katalysatorreste wurden anschließend mit Essigsäure neutralisiert. Die Basizität wird durch Titration mit HCl zu 10,6 mmol/ kg bestimmt.

Auf 75 g des Polyethers wurden dann ca. 0,12 g wasserfreie p-Toluolsulfonsäure zugegeben und damit die Basizität auf 2 mmol/kg (HCl Titration) eingestellt. Gebildetes Kaliumacetat wird als Allophanatisierungskatalysator im Produkt belassen.

### Polyisocyanat A:

HDI-Isocyanurat mit einem NCO-Gehalt von 22,2 % und einer Viskosität bei 23°C von 2,8 Pa*s

### TDI-T 80

Mischung aus 80 Teilen 2,4-Toluylendiisocyanat und 20 Teilen 2,6-Toluylendiisocyanat

### Eingesetzte Messmethoden:

### Hazen-Farbzahl:

Mittels der Hazen-Farbzahl wird der Gelbstich transparenter technischer Flüssigkeiten (z. B. aufgrund von Verunreinigungen oder von Abbauprodukten) bestimmt. Als Standard wird eine saure Lösung von Kaliumhexachloroplatinat eingesetzt. Die Bestimmung erfolgte nach DIN ISO 6271.

### Pendeldämpfungsprüfung

Die Pendeldämpfungsprüfung wurde in Anlehnung an EN ISO 1522 (Ausgabe Sept. 2000) mit einem König-Pendel bestimmt. Bei der Pendeldämpfungsprüfung wird ein Pendel auf die Oberfläche der Beschichtung aufgesetzt und in Schwingungen versetzt. Die Messwerte sind in Pendelschlägen angegeben. Angegeben ist die Zahl der Pendelschläge von der ursprünglichen Auslenkung von 6° bis zu einer Auslenkung von 3°. Je höher die Anzahl der Pendelschläge, desto härter der Lackfilm.

### Vergleichsbeispiel 1

### Ohne Allophanatisierung

Stufe 1 - Es wurden 150 g Polyether A mit 26 g T 80 bei 60 °C für 30 min miteinander umgesetzt bis kein freies NCO mehr nachgewiesen werden konnte.

Stufe 2- Das Produkt aus Stufe 1 wurde dann in 900 g Polyisocyanat A eingerührt und die Mischung für 3 Stunden bei 60 °C gerührt.

Das erhaltene Produkt wies einen NCO von 18,5 % auf und eine Viskosität von 3.900 mPa*s bei 23 °C. Eine kleine Probe ergab in Wasser nach Schütteln eine weißliche, grobteilige Emulsion. Nach 24 Stunden war die Emulsion abgesetzt.

### Beispiel 1

### Mit Allophanatisierung

Es wurde zunächst das Vorprodukt nach Stufe 1 auf gleiche Art und Weise wie in Vergleichsbeispiel 1 beschrieben ist, synthetisiert. Es wurden dann zu 176 g dieses Vorproduktes 0,2 g Kaliumacetat zugegeben und diese Mischung bei Raumtemperatur in 900 g Polyisocyanat A eingerührt. Es wurde für 3 Stunden bei 60 °C gerührt. Das erhaltene Produkt wies einen NCO von 17,5 % auf und eine Viskosität von 3.900 mPa*s bei 23 °C auf. Es wurden 90 mol % der Urethangruppen des in Stufe 1 synthetisierten Vorproduktes zu Allophanatgruppen umgesetzt.

Eine kleine Probe ergabt in Wasser nach Schütteln eine feinteilige, bläulich gefärbte Emulsion. Nach 24 Stunden war die Emulsion noch intakt.

### Beispiel 2

### Mit Allophanatisierungskatalysator im Polyether

Stufe 1- 150 g Polyether B wurden bei Raumtemperatur mit 26 g TDI versetzt und analog Beispiel 1 miteinander umgesetzt bis kein freies NCO mehr nachgewiesen werden konnte.

Stufe 2 - Es wurden 144 g (ca. 14 Gew. %) des Produktes aus Stufe 1 zu 900 g Polyisocyanat A zugegeben und analog Beispiel 1 miteinander umgesetzt. Der gemessene NCO Wert des Produktes betrug 17,7 %, die Viskosität wird zu 3900 mPa*s (bei 23 °C) bestimmt und die Hazen Farbzahl lag bei 55 Hazen. Es wurden 90 mol % der Urethangruppen des in Stufe 1 synthetisierten Vorproduktes zu Allophanatgruppen umgesetzt.

Eine kleine Probe ergab in Wasser nach Schütteln eine feinteilige, bläulich gefärbte Emulsion. Nach 24 Stunden war die Emulsion noch intakt.

### Verwendung als Vernetzer für wässrige Lacke:

Für den wässrigen Lack wurde eine Bindemitteldispersion aus den folgenden Komponenten verwendet.

| Menge [Gew.-teile] | Komponente | | |
|---|---|---|---|
| 240 | Bindemittel | Wässrige Dispersion eines OH-funktionalen Polyester-Polyurethans, OH-Zahl ca. 45 mg KOH bzgl. Feststoff (ca. 40 Gew. % Polyurethan, ca. 6,5 % 1-Methyl-2-pyrrolidon, Rest Wasser) | Daotan® VTW 1225 (Fa. Solutia) |
| 119 | Bindemittel | Wasserverdünnbares, OH-funktionales Polyesterharz | Plusaqua® V 608 (Fa. Omya) |
| 18 | Dispergiermittel | Nichtionisches Dispergierhilfsmittel, fluorierter polymerer, aliphatischer Ester | Fluorad® FC 430 (Fa. 3M) |
| 9 | Additiv | 2-Amino-2-Methyl-1-Propanol (90 % ige Lösung in Wasser) | AMP-90® (Fa. Angus Chemie) |
| 310 | | Wasser | |

Die Komponenten der Bindemitteldispersion wurden intensiv miteinander vermischt.

Zur Herstellung der Lacke wurden jeweils gleiche Mengen der Bindemitteldispersion (bezogen auf deren Feststoffgehalt) und der in den Beispielen und Vergleichsbeispielen synthetisierten Polyisocyanante intensiv miteinander gemischt, um eine möglichst homogene Emulsion der Bindemittel und des Vernetzers zu erreichen.

Die fertige Emulsion wurde mit einem 200 µm Rakel auf ein entfettetes Stahlblech aufgetragen. Es wurde 20 Minuten bei Raumtemperatur abgelüftet, bevor das lackierte Blech in einem Gradientenofen 30 Minuten eingebrannt wurde (Temperaturen gemäß Tabelle 1). Die fertigen Bleche wurden vor der Prüfung 24 Stunden in einem Normklima gelagert (50% Luftfeuchtigkeit, 23°C).

Danach wurde die Härte der Lackfilme mittels Pendeldämpfungsprüfung bestimmt wie oben beschrieben. Die Ergebnisse sind in Tabelle 1 zusammengefasst.

**Tabelle 1: Ergebnisse der Pendeldämpfungsversuche**

| | Einbrenntemperatur [°C] | Beispiel 1 | Beispiel 2 | Vergleich 1 |
|---|---|---|---|---|
| Polyether | - | A | B | A |
| Allophanatisierung | - | Ja | Ja | Nein |
| | 60 | 15 | 18 | 10 |
| | 70 | 30 | 31 | 28 |
| | 80 | 42 | 47 | 42 |
| | 90 | 46 | 49 | 45 |
| | 100 | 49 | 50 | 49 |
| | 110 | 53 | 53 | 51 |
| | 120 | 73 | 72 | 61 |
| | 130 | 80 | 79 | 64 |

Die Beispiele und Vergleichsbeispiele zeigen, dass die Stabilität der Polyisocyanat-Emulsion durch die Allophanatisierung deutlich verbessert wird.

Weiterhin verbessert sich die Härte der mit der erfindungsgemäßen Emulsion hergestellten Lacke.

## Patentansprüche

1. Zweistufiges Verfahren zur Herstellung einer wasseremulgierbaren Polyisocyanatzubereitung, bei dem man in einem ersten Schritt
(A) ein dispergieraktives Umsetzungsprodukt (E) aus mindestens einem Diisocyanat, ausgewählt aus der Gruppe von Tetramethylendiisocyanat, Hexamethylendiisocyanat, Dodecamethylendiisocyanat, 1,4-Diisocyanatocyclohexan, 4,4'-Di-(isocyanatocyclohexyl)-methan, Trimethylhexandiisocyanat, Tetramethylhexandiisocyanat, 1-Isocyanato-3,3,5-trimethyl-5-(isocyanatomethyl)cyclohexan, 2,4- und 2,6-Toluylendiisocyanat, Tetramethylxylylen-diisocyanat, p-Xylylendiisocyanat, 2,4'- und 4,4'-Diisocyanatodiphenylmethan, mit mindestens einem ein- oder mehrwertigen Polyalkylenetheralkohol mit 2 bis 4 C-Atomen in den Alkylengruppen, der eine mindestens 8 Ethylenoxideinheiten aufweisende Polyetherkette umfasst, herstellt,
und man das erhaltene Umsetzungsprodukt (E) in einem zweiten Verfahrensschritt
(B) mit mindestens einem aliphatischen Polyisocyanat mit einer mittleren NCO-Funktionalität von 2,5 bis 3,5 vermischt,
**dadurch gekennzeichnet, dass** man Schritt (B) in Gegenwart eines Allophanatisierungskatalysators ausführt und die Bedingungen so wählt, dass zwischen (E) und dem Polyisocyanat Allophanatgruppen gebildet werden.

2. Verfahren gemäß Anspruch 1, **dadurch gekennzeichnet, dass** das Zahlenverhältnis von OH-Gruppen zu NCO-Gruppen in Schritt (A) 0,8 bis 1,2 beträgt.

3. Verfahren gemäß Anspruch 1 oder 2, **dadurch gekennzeichnet, dass** es sich bei dem Polyalkylenetheralkohol um einen Monoalkohol handelt.

4. Verfahren gemäß einem der Ansprüche 1 bis 3, **dadurch gekennzeichnet, dass** mindestens 10 mol % der Urethangruppen des in Schritt (A) gebildeten Umsetzungsproduktes (E) zu Allophanatgruppen umgesetzt werden.

5. Wasseremulgierbare Polyisocyanatzubereitung, erhältlich nach einem Verfahren gemäß einem der Ansprüche 1 bis 4.

6. Wasseremulgierbare Polyisocyanatzubereitung gemäß Anspruch 5, **dadurch gekennzeichnet, dass** die Zubereitung 1 bis 25 Gew.-% des Umsetzungsproduktes (E) umfasst.

7. Verwendung der wasseremulgierbaren Polyisocyanatzubereitung gemäß Anspruch 5 oder 6 in wässrigen Beschichtungsmitteln.

8. Verwendung der wasseremulgierbaren Polyisocyanatzubereitung gemäß Anspruch 5 oder 6 in Klebstoffdispersionen.

## Claims

1. A two-stage process for preparing a water-emulsifiable polyisocyanate formulation, in which in a first step
(A) a dispersing-active product (E) of the reaction of at least one diisocyanate selected from the group consisting of tetramethylene diisocyanate, hexamethylene diisocyanate, dodecamethylene diisocyanate, 1,4-diisocyanato-cyclohexane, 4,4'-di(isocyanatocyclohexyl)methane, trimethylhexane diisocyanate, tetramethylhexane diisocyanate, 1-isocyanato-3,3,5-trimethyl-5-(isocyanatomethyl)cyclohexane, 2,4- and 2,6-tolylene diisocyanate, tetramethylxylylene diisocyanate, p-xylylene diisocyanate, 2,4'-and 4,4'-diisocyanatodiphenylmethane with at least one mono- or polyhydric polyalkylene ether alcohol having 2 to 4 carbon atoms in the alkylene groups and comprising a polyether chain containing at least 8 ethylene oxide units is prepared
and in a second step of the process
(B) the resultant reaction product (E) is mixed with at least one aliphatic polyisocyanate having an average NCO functionality of from 2.5 to 3.5,
wherein step (B) is performed in the presence of an allophanatization catalyst and the conditions are chosen such that allophanate groups are formed between (E) and the polyisocyanate.

2. The process according to claim 1, wherein the numerical ratio of OH groups to NCO groups in step (A) is from 0.8 to 1.2.

3. The process according to claim 1 or 2, wherein the polyalkylene ether alcohol is a monoalcohol.

4. The process according to one of claims 1 to 3, wherein at least 10 mol% of the urethane groups in the reaction product (E) formed in step (A) are reacted to allophanate groups.

5. A water-emulsifiable polyisocyanate formulation obtainable by a process according to one of claims 1 to 4.

6. The water-emulsifiable polyisocyanate formulation according to claim 5, comprising from 1 to 25% by weight of the reaction product (E).

7. The use of the water-emulsifiable polyisocyanate formulation according to claim 5 or 6 in aqueous coating compositions.

8. The use of the water-emulsifiable polyisocyanate formulation according to claim 5 or 6 in adhesive dispersions.

## Revendications

1. Procédé en deux étapes pour la préparation d'une composition émulsifiable dans l'eau de polyisocyanate, dans lequel, dans une première étape,
(A) on prépare un produit de transformation (E) actif en dispersion à partir d'au moins un diisocyanate, choisi dans le groupe formé par le tétraméthylènediisocyanate, l'hexaméthylènediisocyanate, le dodécaméthylènediisocyanate, de 1,4-diisocyanatocyclohexane, le 4,4'-di-(isocyanatocyclohexyl)-méthane, le triméthylhexanediisocyanate, le tétraméthylhexanediisocyanate, le 1-isocyanato-3,3,5-triméthyl-5-(isocyanatométhyl)cyclohexane, le 2,4-toluylènediisocyanate et le 2,6-toluylènediisocyanate, le tétraméthylxylylènediisocyanate, le p-xylylènediisocyanate, le 2,4'-diisocyanatodiphénylméthane et le 4,4'-diisocyanatodiphénylméthane, avec au moins un polyalkylène-éther-alcool monovalent ou polyvalent comprenant 2 à 4 atomes de carbone dans les groupes alkylène, qui comprend une chaîne polyéther comprenant au moins 8 unités d'oxyde d'éthylène,
et, dans une deuxième étape de procédé, le produit de transformation (E) obtenu
(B) est mélangé avec au moins un polyisocyanate aliphatique présentant une fonctionnalité NCO moyenne de 2,5 à 3,5, **caractérisé**
**en ce qu'**on réalise l'étape (B) en présence d'un catalyseur d'allophanatisation et on choisit les conditions de manière telle que des groupes allophanate sont formés entre (E) et le polyisocyanate.

2. Procédé selon la revendication 1, **caractérisé en ce que** le rapport numérique de groupes OH aux groupes NCO dans l'étape (A) est de 0,8 à 1,2.

3. Procédé selon la revendication 1 ou 2, **caractérisé en ce qu'**il s'agit, pour le polyalkylène-éther-alcool, d'un monoalcool.

4. Procédé selon l'une quelconque des revendications 1 à 3, **caractérisé en ce qu'**au moins 10% en mole des groupes uréthane du produit de transformation (E) formé dans l'étape (A) sont transformés en groupes allophanate.

5. Composition émulsifiable dans l'eau de polyisocyanate, pouvant être obtenue selon un procédé selon l'une quelconque des revendications 1 à 4.

6. Composition émulsifiable dans l'eau de polyisocyanate selon la revendication 5, **caractérisée en ce que** la composition comprend 1 à 25% en poids du produit de transformation (E).

7. Utilisation de la composition émulsifiable dans l'eau de polyisocyanate selon la revendication 5 ou 6 dans des agents de revêtement aqueux.

8. Utilisation de la composition émulsifiable dans l'eau de polyisocyanate selon la revendication 5 ou 6 dans des dispersions d'adhésif.
